# FASCICULE DE BREVET EUROPEEN

(11) **EP 1 072 024 B1**
(45) Date de publication et mention de la délivrance du brevet: **11.06.2003**
(21) Numéro de dépôt: 99909021.0
(22) Date de dépôt: 17.03.1999
(51) Int. Cl.: G07F 7/10, G06K 7/00

(54) **PROCEDE DE COMMUTATION D'APPLICATIONS SUR UNE CARTE A PUCE MULTI-APPLICATIVE**
VERFAHREN ZUM UMSCHALTEN VON ANWENDUNGEN IN EINER CHIPKARTE FÜR MEHRERE ANWENDUNGEN
METHOD FOR SWITCHING APPLICATIONS ON A MULTIPLE APPLICATION CHIP CARD

(30) Priorité: 24.03.1998 FR 9803620
(43) Date de publication de la demande: 31.01.2001
(73) Titulaire: Gemplus, 13881 Gémenos Cedex (FR)
(72) Inventeur: GARNIER, Thierry, F-13420 Gémenos (FR)
(86) Numéro de dépôt international: FR9900605
(87) Numéro de publication internationale: WO99049426

(56) Documents cités:
- EP-A- 0 209 092
- EP-A- 0 256 768
- EP-A- 0 513 507
- FR-A- 2 703 167
- US-A- 4 794 236

## Description

L'invention concerne les cartes à microcircuits électroniques, dites cartes à puce électronique, qui sont connectées à des dispositifs électroniques pour permettre à ces derniers de réaliser des fonctions particulières correspondant à une application. Elle concerne, plus particulièrement, les cartes à puce électronique qui sont prévues pour enregistrer plusieurs applications et pour lesquelles l'invention propose un procédé et un dispositif de commutation pour configurer une carte multi-applicative de manière que la carte soit reconnue par des terminaux, chaque terminal étant dédié à une application spécifique.

Il est connu d'utiliser une carte à puce électronique qui, connectée à un dispositif électronique tel qu'un téléphone mobile que l'on appellera terminal, permet à ce terminal de réaliser des fonctions correspondant à une application telle qu'une liaison téléphonique avec prépaiement.

Jusqu'à ce jour, d'une part, une carte à puce électronique ne contient qu'une seule application et, d'autre part, un terminal est dédié à une application de sorte que ce dernier ne peut communiquer qu'avec une carte à puce électronique contenant l'application à laquelle il est dédié.

Or, par suite du développement de la capacité mémoire des puces électroniques, il est maintenant possible d'enregistrer plusieurs applications sur une même carte à puce électronique, ce qui pose le problème pour le terminal de reconnaître la carte qui contient l'application pour laquelle il est dédié.

L'invention a donc pour but de mettre en oeuvre, dans une carte à puce électronique contenant plusieurs applications, un procédé de commutation pour permettre au terminal auquel est connectée la carte à puce de reconnaître la carte qui contient l'application à laquelle il est dédié.

L'invention concerne donc un procédé de commutation d'applications sur une carte à puce multi-applicative susceptible d'être connectée à différents terminaux dédiés chacun à une application particulière, chaque terminal étant apte à transmettre à la carte à puce multi-applicative une commande de remise à zéro et à ne reconnaître que le message dit ATR (ATR étant un acronyme anglo-saxon pour "Answer To Reset") transmis par la carte à puce correspondant à son application, caractérisé en ce qu'il comprend les étapes de la revendication 1.

Dans une variante préférée de réalisation, chaque case de la table de configuration enregistre une adresse du message ATR dans une mémoire séparée.

Dans une variante de la précédente, la table de configuration enregistre, dans une première case, l'adresse de l'octet de type de communication appelé octet TS qui constitue le premier octet du message ATR et, dans une deuxième case, l'adresse des autres octets du message ATR.

Dans une autre variante encore, l'octet de type de communication TS n'est pas contenu dans une mémoire séparée mais est fourni par un générateur.

L'invention concerne également une carte à puce multi-applicative selon la revendication 12.

Dans une forme préférée de réalisation, la table de configuration ne contient, pour chaque application, que les adresses dans la mémoire du premier octet TS du message ATR et des autres octets du message ATR.

Dans une variante, la mémoire contenant le premier octet TS est remplacée par un générateur de l'octet TS.

D'autres caractéristiques et avantages de la présente invention apparaîtront à la lecture de la description suivante d'un exemple particulier de réalisation, ladite description étant faite en relation avec le dessin joint dans lequel :

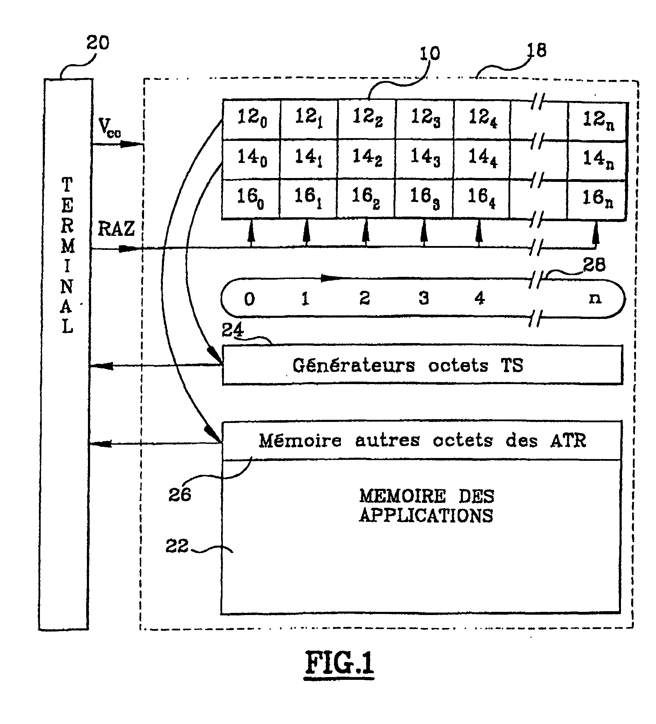

- la figure 1 est une table de configuration qui doit être mise en place dans la carte à puce électronique

Pour mettre en oeuvre le procédé selon l'invention.

Avant de décrire l'invention, il est d'abord rappelé qu'un terminal 20 (figure 1) a besoin de certaines informations pour communiquer avec une carte à puce 18. En outre, pour établir une communication, le terminal doit tout d'abord mettre sous tension Vcc la carte à puce et « réveiller » celle-ci en émettant un signal RAZ sur la voie remise à zéro de la carte à puce. Dans le cas où la remise à zéro de la carte est déclenchée après la mise sous tension de celle-ci, on parle de remise à zéro à froid. Si la remise à zéro est déclenchée après une remise à zéro précédente sans que la carte à puce ait été mise hors tension, on parle de remise à zéro à chaud.

A la suite d'une remise à zéro à froid ou à chaud, la carte à puce informe le terminal sur ses possibilités en matière de communication telles que le protocole utilisé, la vitesse de communication à utiliser, l'intervalle de temps entre octets consécutifs. Elle peut également émettre des octets qui sont spécifiques à l'application qu'elle contient pour qu'un terminal, dédié à la même application, puisse reconnaître dès la mise sous tension que la carte à puce est propre ou impropre à l'exploitation par le terminal. La trame d'octets émise par la carte à puce lors d'une remise à zéro de celle-ci s'appelle une réponse à remise à zéro dite message ATR et la façon dont doit être structurée une telle réponse est normalisée.

Dans l'état actuel de la technique, une réponse à une remise à zéro est habituellement unique pour une carte à puce même si plusieurs applications cohabitent au sein de la même carte. Cependant, certaines cartes à puce sont capables d'émettre deux réponses distinctes à une remise à zéro RAZ selon qu'il s'agit d'une remise à zéro à froid ou à chaud. Mais il n'est pas envisageable d'utiliser la même réponse (ou deux réponses) à la remise à zéro car la plupart des terminaux ont besoin, pour démarrer une application de disposer des informations de la réponse en accord avec leur application dédiée.

On associe à chaque application contenue dans une carte à puce multi-applicative, une réponse spécifique à une remise à zéro RAZ qui est enregistrée dans une case d'une table 10 dite de configuration disposée dans la carte 18 et on passe d'une case de la table à la suivante par une commutation circulaire, chaque commutation étant obtenue par une remise à zéro de la carte. Ainsi, à chaque commutation, le terminal reçoit une réponse à une remise à zéro d'une application et ceci tant qu'il n'a pas reçu la réponse qui correspond à son application.

Une structure de la table de configuration 10 est représentée sur la figure 1. Chaque case 12₀, 12₁, 12₂, 12₃, ... 12ₙ de la ligne 12 contient une référence à une adresse de la mémoire 22 de la carte 18 où sont enregistrées tout ou partie des données de la réponse ATR à une remise à zéro d'une application particulière. Ces adresses correspondent à une partie 26 de la mémoire 22.

De préférence, ces données de la réponse sont partielles et ne concernent pas le premier octet du message ATR dont la référence est enregistrée dans une case correspondante 14₀, 14₁, 14₂, ..., 14ₙ de la ligne 14 de la table 10. Ce premier octet, appelé TS dans la norme ISO 7816-3, indique la convention utilisée pour communiquer avec le terminal, c'est-à-dire la communication directe ou indirecte.

Ces octets TS peuvent être enregistrés dans une partie de la mémoire 22 mais ils sont de préférence obtenus par des générateurs 24 séparés de la mémoire 22.

Au lieu de contenir des références d'accès à une mémoire contenant les octets de la réponse à remise à zéro ATR, les cases 12₀ à 12ₙ et 14₁ à 14ₙ pourraient contenir les octets eux-mêmes. Cependant, une telle manière de faire aboutirait à une table qui utiliserait un espace mémoire important.

Par ailleurs, il serait possible aussi de combiner les couples de cases (12₀, 14₀), (12₁, 14₁), (12₂, 14₂), ... (12ₙ, 14ₙ) pour envoyer une réponse complète contenant le premier octet mais dans le fonctionnement de la carte à puce, il est important que ce premier octet soit émis très rapidement, soit dans un délai compris entre 400 et 40.000 cycles du terminal, tandis que les octets suivants peuvent être émis dans un délai inter-octets qui doit être inférieur à 9.600 fois 40.000 cycles du terminal. Ce délai supplémentaire permet d'accéder aux autres octets sans contrainte de temps particulier.

Aux deux cases d'une colonne est associée une troisième case, 16₀ pour la première colonne et 16ₙ pour la nième colonne, où est enregistré un code de validité, à deux chiffres par exemple, qui indique l'état de la validité de la colonne en fonction du type de remise à zéro.

Ainsi,
- le code 01 correspond à une colonne ou entrée valide lors d'une remise à zéro à froid uniquement,
- le code 10 correspond à une colonne ou entrée valide lors d'une remise à zéro à chaud uniquement,
- le code 11 correspond à une colonne ou entrée valide que la remise à zéro soit à froid ou à chaud, et
- le code 00 correspond à une colonne ou entrée toujours invalide.

Il est à noter que chaque application contenue dans la carte à puce comporte une ou plusieurs entrées car elle peut être sélectionnée par une remise à zéro à froid à chaud ou indifféremment à froid ou à chaud.

La table 10 est adressée par indexation circulaire à l'aide d'un index 28 qui peut prendre les positions 0, 1, 2, 3, ..., n au fur et à mesure de l'indexation. La position de l'index nul désigne la réponse par défaut à une remise à zéro de la carte. Cette réponse peut ou ne peut pas être associée à une application et il est recommandé que la table de configuration comporte au moins un enregistrement valide dédié à cette réponse.

Les différentes étapes du procédé de commutation d'application seront décrites ci-après. A la mise en place de la carte à puce multi-applicative 18 dans le terminal 20, ce dernier met la carte sous tension Vcc' ce qui initialise une remise à zéro RAZ dite à froid (étape 30). Si l'index 28 de la table est « pointé » sur une colonne dans laquelle la case 16 contient le code de validité 01 ou 11, cette colonne est sélectionnée car l'entrée est valide : c'est le résultat positif du test de validité de l'étape 32. L'étape suivante 34 consiste en l'envoi du premier octet TS vers le terminal, premier octet qui est déterminé par le contenu de la case 14 et qui est fourni par l'in des générateurs 24. L'étape 36 consiste à lire la case 12 pour obtenir la référence du reste du code ATR dans la partie 26 de la mémoire 22 de la carte. Dès que cette référence est connue, le mécanisme d'indexation est avancé d'une unité pour pointer la colonne suivante de la table (étape 38). L'étape suivante 40 consiste en l'envoi du reste des données ATR.

Au cas où les données ATR ne seraient pas reconnues par le terminal comme correspondant à son application dédiée, il enverra à la carte, selon son organisation, soit une remise à zéro à chaud, soit une indication de déconnecter la carte et la reconnecter pour obtenir une remise à zéro à froid. Ainsi, la carte revient à l'état 30.

Dans le cas où le test de validité 32 est négatif, le mécanisme d'indexation est avancé d'une unité pour pointer la colonne suivante de la table 10.

Par ce procédé, si la carte à puce contient l'application à laquelle le terminal est dédié, ce dernier la reconnaîtra par l'intermédiaire de la table.

La table 10 peut être configurée de différentes manières pour s'adapter à des cas particuliers. Ainsi, lorsqu'une application d'une carte à puce multi-applicative nécessite une probabilité plus grande d'être sélectionnée, plusieurs entrées ou enregistrements de la table correspondront à cette application de sorte que la configuration de la carte dédiée à l'application sera désignée comme configuration courante plus fréquemment que les autres.

Certaines applications nécessitent deux réponses, à des remises à zéro consécutives, à cet effet, deux entrées ou colonnes adjacentes de la table de configuration contiendront, la première, les informations correspondant à une remise à zéro à froid et la deuxième les informations correspondant à une remise à zéro à chaud.

Dans un autre cas particulier, il peut être intéressant de privilégier une application en maintenant dans l'état la configuration courante. Pour cela, la valeur précédente de l'index pourra être restaurée lorsque le terminal aura reconnu l'envoi du message ATR (après l'étape 40). Ainsi, à la prochaine remise à zéro de la carte, la dernière configuration utilisée sera à nouveau la configuration courante.

Dans le cas où certains terminaux utilisent une commande de sélection d'application, l'index sera initialisé pour désigner l'entrée dans la table de configuration correspondant à cette application.

La table de configuration peut être réalisée dans une partie dédiée de la mémoire 22 de la carte ou dans une extension de la structure d'enregistrement des applications elles-mêmes.

## Revendications

1. Procédé de commutation d'applications sur une carte à puce multi-applicative (18) susceptible d'être connectée à différents terminaux (20) dédiés chacun à une application particulière, chaque terminal (20) étant apte à transmettre à la carte à puce multi-applicative une commande de remise à zéro (RAZ) et à ne reconnaître que le message (ATR) transmis par la carte à puce correspondant à son application, **caractérisé en ce qu'**il comprend les étapes suivantes consistant à :
(a) créer dans la carte à puce une table de configuration (10) à accès par index pour enregistrer le message (ATR) de chaque application contenue dans la carte à puce, le message (ATR) étant scindé en deux parties au moins, l'une correspondant au premier octet (TS) indique le type de communication direct ou indirect et est déterminée par le contenu d'une première case de la table de configuration (14), l'autre correspondant aux autres octets du message (ATR) et déterminée par le contenu d'une seconde case de la table de configuration (12),
(b) lire le contenu (TS) de la case (14) de la table de configuration (10) qui est sélectionnée par l'index en réponse à une commande de remise à zéro (RAZ) transmise par le terminal (20),
(c) transmettre au terminal le premier octet (TS) lu à l'étape précédente,
(d) lire le contenu de la case (12) de la table de configuration (10),
(e) transmettre les autres octets du message (ATR) au terminal,
(f) augmenter d'une unité l'index d'accès à la table de configuration (10) modulo n, n étant le nombre de cases ou colonnes de la table de configuration, et
(g) retour à l'étape (b).

2. Procédé selon la revendication 1, **caractérisé en ce que** :
- le message (ATR) est enregistré dans une mémoire séparée (26) de la table de configuration, et
- les cases de la table de configuration contiennent l'adresse du message (ATR) dans la mémoire séparée (26).

3. Procédé selon la revendication 2, **caractérisé en ce que** :
- chaque partie du message (ATR) est enregistrée dans une mémoire séparée (24, 26) de la table de configuration, et
- l'adresse de chaque partie de message (ATR) est enregistrée dans une case (12, 14) de la table de configuration.

4. Procédé selon la revendication 3, **caractérisé en ce que** le premier octet (TS) est fourni par un générateur (24) en fonction d'une valeur, qui permet de coder la convention de communication à utiliser, contenue dans la table de configuration.

5. Procédé selon la revendication 1, 2, 3 ou 4, **caractérisé en ce que** chaque case de la table de configuration contient un code indiquant le type de remise à zéro auquel correspond le message (ATR), ledit message n'étant transmis que si la commande de remise à zéro fournie par le terminal correspond au type visé par le code.

6. Procédé selon la revendication 2, 3, 4 ou 5, **caractérisé en ce que** les étapes (b) et (d) consistent dans les étapes suivantes consistant à :
(b1) lire l'adresse du premier octet (TS) du message (ATR),
(b2) lire la valeur de l'octet (TS) à l'adresse lue
par l'étape (b1),
(d1) lire l'adresse des autres octets (TS) du message (ATR),
(d2) lire les autres octets du message (ATR) à l'adresse lue par l'étape (d1).

7. Procédé selon la revendication 6, **caractérisé en ce que** les étapes (b1) et (b2) sont remplacées par les étapes suivantes consistant à :
(b'1) lire la valeur permettant de coder la convention de communication,
(b'2) décoder le type de convention de communication à utiliser pour communiquer avec le terminal.

8. Procédé selon la revendication 6 ou 7, **caractérisé en ce que** l'étape (f) est réalisée entre les étapes (d1) et (d2).

9. Procédé selon l'une quelconque des revendications précédentes 5 à 8, **caractérisé en ce que**, dans l'étape (a), le message (ATR) correspondant à une même application est enregistré dans au moins deux cases ou colonnes correspondant chacune au même type de remise à zéro.

10. Procédé selon l'une quelconque des revendications précédentes 5 à 8, **caractérisé en ce que**, dans l'étape (a), le message (ATR) correspondant à une même application est enregistré chacun dans une case ou colonne correspondant chacune à un type de remise à zéro.

11. Procédé selon la revendication 10, **caractérisé en ce que** la première case ou colonne dans l'ordre d'indexation circulaire correspond à une remise à zéro à froid tandis que la deuxième case ou colonne correspond à une remise à zéro à chaud.

12. Carte à puce multi-applicative (18) pour terminaux dédiés comprenant essentiellement une mémoire (22) dans laquelle sont enregistrées une pluralité d'applications, **caractérisée en ce qu'**elle comprend, en outre :
- une table de configuration (10) à accès par index pour enregistrer au moins un message pour chaque application, le contenu d'une première case (14) de la table détermine le premier octet (TS) d'un message (ATR) qui indique le type de communication direct ou indirect, le contenu d'une seconde case de la table (12) correspond aux autres octets du message (ATR), et
- des moyens (28) pour lire, par indexation circulaire, les colonnes de la table et transmettre leur contenu au terminal dédié auquel la carte à puce est connectée.

13. Carte à puce selon la revendication 12, **caractérisée en ce que** le message enregistré dans la table de configuration est le message (ATR) à transmettre pour l'application correspondante.

14. Carte à puce selon la revendication 12, **caractérisée en ce que** le message enregistré dans la table de configuration est l'adresse, dans la mémoire, du message (ATR) et **en ce qu'**une partie de la mémoire (22) est dédiée (24, 26) à l'enregistrement des messages (ATR).

## Patentansprüche

1. Umschaltverfahren von Applikationen auf einer Multiapplikations-Chipkarte (18), die an verschiedene Terminals (20) angeschlossen werden kann, die jeweils einer besonderen Applikation gewidmet sind, wobei jedes Terminal einen Nullrückstellungsbefehl (RAZ) an die Multiapplikations-Chipkarte übertragen und nur diejenige, von der Chipkarte übertragene Meldung (ATR) erkennen kann, die ihrer Applikation entspricht, **dadurch gekennzeichnet, dass** es die folgenden Etappen umfasst:
(a) Erstellung in der Chipkarte einer per Index zugänglichen Konfigurationstabelle (10) zum Aufzeichnen der Meldung (ATR) jeder in der Chipkarte enthaltenen Applikation, wobei die Meldung (ATR) in mindestens zwei Teile unterteilt wird, wobei ein dem ersten Byte (TS) entsprechender Teil den Kommunikationstyp, direkt oder indirekt, anzeigt und durch den Inhalt eines ersten Kastens der Konfigurationstabelle bestimmt wird, während der andere den anderen Bytes der Meldung (ATR) entspricht und durch den Inhalt eines zweiten Kastens (12) der Konfigurationstabelle bestimmt wird,
(b) Lesen des Inhalts (TS) des Kastens (14) der Konfigurationstabelle in Beantwortung eines vom Terminal (20) übertragenen Nullrückstellungsbefehls (RAZ),
(c) Übertragung an das Terminal des ersten, bei der vorherigen Etappe gelesenen Bytes (TS),
(d) Lesen des Inhalts des Kastens (12) der Konfigurationstabelle (10),
(e) Übertragung der anderen Bytes der Meldung (ATR) an das Terminal,
(f) Erhöhung um eine Einheit des Zugriffsindex zur Konfigurationstabelle (10) Modul n, wobei n die Anzahl der Kästen bzw. Spalten der Konfigurationstabelle ist, und
(g) Rückkehr zur Etappe (b).

2. Verfahren nach Anspruch 1, **dadurch gekennzeichnet, dass**:
- die Meldung (ATR) in einem getrennten Speicher (26) der Konfigurationstabelle aufgezeichnet wird, und
- die Kästen der Konfigurationstabelle die Adresse der Meldung (ATR) im getrennten Speicher (26) enthalten.

3. Verfahren nach Anspruch 2, **dadurch gekennzeichnet, dass**:
- jeder Teil der Meldung (ATR) in einem getrennten Speicher (24, 26) der Konfigurationstabelle aufgezeichnet wird, und
- die Adresse jedes Teils der Meldung (ATR) in einem Kasten (12, 14) der Konfigurationstabelle aufgezeichnet wird.

4. Verfahren nach Anspruch 3, **dadurch gekennzeichnet, dass** das erste Byte (TS) von einem Generator (24) entsprechend einem Wert geliefert wird, der ein Codieren der zu verwendenden, in der Konfigurationstabelle enthaltenen Kommunikationskonvention ermöglicht.

5. Verfahren nach Anspruch 1, 2, 3 oder 4, **dadurch gekennzeichnet, dass** jeder Kasten der Konfigurationstabelle einen Code enthält, der den Typ der Nullrückstellung enthält, dem die Meldung (ATR) entspricht, wobei die besagte Meldung nur dann übertragen wird, wenn der vom Terminal gelieferte Nullrückstellungsbefehl dem vom Code angezeigten Typ entspricht.

6. Verfahren nach Anspruch 2, 3, 4 oder 5, **dadurch gekennzeichnet, dass** die Etappen (b) und (d) aus den folgenden Etappen bestehen:
(b1) Lesen der Adresse des ersten Bytes (TS) der Meldung (ATR),
(b2) Lesen des Werts des Bytes (TS) an der von der Etappe (b1) gelesenen Adresse,
(d1) Lesen der Adresse der anderen Bytes (TS) der Meldung (ATR),
(d2) Lesen der anderen Bytes der Meldung (ATR) an der von der Etappe (d1) gelesenen Adresse.

7. Verfahren nach Anspruch 6, **dadurch gekennzeichnet, dass** die Etappen (b1) und (b2) durch die folgenden Etappen ersetzt werden:
(b'1) Lesen des das Codieren der Kommunikationskonvention gestattenden Werts,
(b'2) Decodieren des Typs der zur Kommunikation mit dem Terminal verwendeten Kommunikationskonvention.

8. Verfahren nach Anspruch 6 oder 7, **dadurch gekennzeichnet, dass** die Etappe (f) zwischen den Etappen (d1) und (d2) durchgeführt wird.

9. Verfahren nach einem der vorherigen Ansprüche 5 bis 8, **dadurch gekennzeichnet, dass** in Etappe (a) die einer gleichen Applikation entsprechende Meldung (ATR) in mindestens zwei Kästen bzw. Spalten aufgezeichnet wird, die jeweils dem gleichen Nullrückstellungstyp entsprechen.

10. Verfahren nach einem der vorherigen Ansprüche 5 bis 8, **dadurch gekennzeichnet, dass** in Etappe (a) die einer gleichen Applikation entsprechende Meldung (ATR) jeweils in einem Kasten bzw. einer Spalte aufgezeichnet wird, die jeweils einem Nullrückstellungstyp entsprechen.

11. Verfahren nach Anspruch 10, **dadurch gekennzeichnet, dass** der erste Kasten bzw. die erste Spalte in der Reihenfolge der umlaufenden Indexierung einer Nullrückstellung in kaltem Zustand entspricht, während der zweite Kasten bzw. die zweite Spalte einer Nullrückstellung in warmem Zustand entspricht.

12. Multiapplikations-Chipkarte (18) für gewidmete Terminals, mit hauptsächlich einem Speicher (22), in dem eine Mehrzahl von Applikationen aufgezeichnet ist, **dadurch gekennzeichnet, dass** sie ferner enthält:
- eine per Index zugängliche Konfigurationstabelle (10) zum Aufzeichnen mindestens einer Meldung für jede Applikation, wobei der Inhalt eines ersten Kastens (14) der Tabelle das erste Byte (TS) einer Meldung (ATR) bestimmt, das den Kommunikationstyp, direkt oder indirekt, angibt, während der Inhalt eines zweiten Kastens (12) der Tabelle den anderen Bytes der Meldung (ATR) entspricht, und
- Mittel (28) zum Lesen, per umlaufender Indexierung, der Spalten der Tabelle und zum Übertragen ihres Inhalts an das gewidmete Terminal, an dem die Chipkarte angeschlossen ist.

13. Chipkarte nach Anspruch 12, **dadurch gekennzeichnet, dass** die in der Konfigurationstabelle aufgezeichnete Meldung die für die entsprechende Applikation zu übertragende Meldung (ATR) ist.

14. Chipkarte nach Anspruch 12, **dadurch gekennzeichnet, dass** die in der Konfigurationstabelle aufgezeichnete Meldung die Adresse der Meldung (ATR) im Speicher ist, und dass ein Teil des Speichers (22) der Aufzeichnung der Meldungen (ATR) gewidmet ist.

## Claims

1. A method of switching applications on a multi-application chip card (18) able to be connected to different terminals (20) each dedicated to a particular application, each terminal (20) being able to transmit a reset command (RAZ) to the multi-application chip card and to recognise only the message (ATR) transmitted by the corresponding chip card to its application, **characterised in that** it comprises the following steps consisting of:
(a) creating in the chip card an indexed-access configuration table (10) for recording the message (ATR) of each application contained in the chip card, the message (ATR) being divided into at least two parts, one, corresponding to the first byte (TS), indicates the communication type, direct or indirect, and is determined by the content of a first box (14) in the configuration table, the other corresponding to the other bytes of the message (ATR) and determined by the content of a second box (12) in the configuration table,
(b) reading the content (TS) of the box (14) in the configuration table (10) which is selected by the index in response to a reset command (RAZ) transmitted by the terminal (20),
(c) transmitting to the terminal the first byte (TS) read during the previous step (b),
(d) reading the content of the box (12) in the configuration table (10),
(e) transmitting the other bytes of the message (ATR) to the terminal,
(f) increasing by one unit the index for access to the configuration table (10) modulo n, n being the number of boxes or columns in the configuration table, and
(g) returning to step (b).

2. A method according to Claim 1, **characterised in that**:
- the message (ATR) is recorded in a separate memory (26) in the configuration table, and
- the boxes in the configuration table contain the address of the message (ATR) in the separate memory (26).

3. A method according to Claim 2, **characterised in that**:
- each part of the message (ATR) is recorded in a separate memory (24, 26) in the configuration table, and
- the address of each message part (ATR) is recorded in a box (12, 14) in the configuration table.

4. A method according to Claim 3, **characterised in that** the first byte (TS) is supplied by a generator (24) as a function of a value, which makes it possible to code the communication convention to be used, contained in the configuration table.

5. A method according to Claim 1, 2, 3 or 4, **characterised in that** each box in the configuration table contains a code indicating the type of reset to which the message (ATR) corresponds, the said message being transmitted only if the reset command supplied by the terminal corresponds to the type referred to by the code.

6. A method according to Claim 2, 3, 4 or 5, **characterised in that** steps (b) and (d) consist of the following steps consisting of:
(b1) reading the address of the first byte (TS) of the message (ATR),
(b2) reading the value of the byte (TS) at the address read by step (b1),
(d1) reading the address of the other bytes of the message (ATR),
(d2) reading the other bytes of the message (ATR) at the address read by step (d1).

7. A method according to Claim 6, **characterised in that** steps (b1) and (b2) are replaced by the following steps consisting of:
(b'1) reading the value making it possible to code the communication convention,
(b'2) decoding the type of communication convention to be used for communicating with the terminal.

8. A method according to Claim 6 or 7, **characterised in that** step (f) is performed between steps (d1) and (d2).

9. A method according to any one of the preceding Claims 5 to 8, **characterised in that**, in step (a), the message (ATR) corresponding to one and the same application is recorded in at least two boxes or columns each corresponding to the same type of reset.

10. A method according to any one of the preceding Claims 5 to 8, **characterised in that**, in step (a), the message (ATR) corresponding to one and the same application is each recorded in a box or column each corresponding to a type of reset.

11. A method according to Claim 10, **characterised in that** the first box or column in the circular indexing order corresponds to a cold reset whilst the second box or column corresponds to a hot reset.

12. A multi-application chip card (18) for dedicated terminals comprising essentially a memory (22) in which a plurality of applications are recorded, **characterised in that** it also comprises:
- an indexed-access configuration table (10) for recording at least one message for each application, the content of a first box (14) in the table determines the first byte (TS) of a message (ATR) which indicates the type of communication, direct or indirect, the content of a second box (12) in the table corresponds to the other bytes of the message (ATR), and
- means (28) for reading the columns in the table by circular indexing and transmitting their content to the dedicated terminal to which the chip card is connected.

13. A chip card according to Claim 12, **characterised in that** the message recorded in the configuration table is the message (ATR) to be transmitted for the corresponding application.

14. A chip card according to Claim 12, **characterised in that** the message recorded in the configuration table is the address, in the memory, of the message (ATR) and **in that** part of the memory (22) is dedicated (24, 26) to the recording of the messages (ATR).
